**Europäisches Patentamt**

**European Patent Office**

**Office européen des brevets**

(11) Veröffentlichungsnummer : **0 187 788**
**B1**

(12) **EUROPÄISCHE PATENTSCHRIFT**

(45) Veröffentlichungstag der Patentschrift :
**17.08.88**

(51) Int. Cl.⁴ : **B 65 G 65/36**

(21) Anmeldenummer : **85903253.4**

(22) Anmeldetag : **22.06.85**

(86) Internationale Anmeldenummer :
**PCT/EP 85/00301**

(87) Internationale Veröffentlichungsnummer :
**WO/8600871 (13.02.86 Gazette 86/04)**

(54) **SILO MIT KREISRUNDEM GRUNDRISS FÜR SCHÜTTGÜTER UND EINEM AN EINER STÜTZSÄULE HEB- UND SENKBAR ANGEORDNETEN QUERFÖRDERER.**

(30) Priorität : **20.07.84 DE 3426806**

(43) Veröffentlichungstag der Anmeldung :
**23.07.86 Patentblatt 86/30**

(45) Bekanntmachung des Hinweises auf die Patenterteilung : **17.08.88 Patentblatt 88/33**

(84) Benannte Vertragsstaaten :
**AT BE CH FR GB IT LI LU NL SE**

(56) Entgegenhaltungen :
**DE-A- 1 914 600**
**DE-A- 1 933 337**
**DE-A- 3 233 742**

(73) Patentinhaber : **AJO STAHLBAU GMBH & Co. KG**
**D-5905 Freudenberg-Oberfischbach (DE)**

(72) Erfinder : **BUDDENBERG, Jörg Wolfgang**
**Filderstrasse 141**
**D-4130 Moers 1 (DE)**

(74) Vertreter : **Ackmann, Günther, Dr.-Ing.**
**Claubergstrasse 24 Postfach 10 01 01**
**D-4100 Duisburg 1 (DE)**

## Beschreibung

Die Erfindung betrifft einen Silo mit kreisrundem Grundriß für Schüttgüter, welcher eine zentrische Stützsäule, ein an der Stützsäule heb- und senkbar sowie um die Stützsäule verdrehbar angeordnetes Hub- und Drehgestell mit einem mittels eines Kragarmes radial angeordneten Querförderer und Mittel zum Füllen des Silos enthält, wobei die Stützsäule aus einem einen zentrischen Entleerungsschacht bildenden, wendelförmigen Band besteht.

Bei einem bekannten Großsilo dieser Art (NL-Patentanmeldung 8103486) werden eine Füllvorrichtung und eine Kranbrücke mit dem Querförderer um die Mittelachse des Silos gedreht, wobei das Schüttgut durch das bis kurz über den Füllstand reichende Füllrohr nach unten fällt und von dem horizontal geführten Querförderer radial nach außen transportiert wird. Der Querförderer wird mit steigendem Füllstand angehoben, wobei er seine horizontale Lage beibehält. Zur Entleerung werden die beiden Schnecken des Querförderers gegenläufig derart angetrieben, daß sie das Schüttgut radial nach innen fördern, wo es über Ringscheiben der Stützsäule in einen Entleerungsschacht nach unten fällt und dort mittels eines Schneckenförderers abgezogen wird. Die Ringscheiben sind mit Abstand säulenförmig angeordnet, und deren horizontale Ringfläche ist mindestens so breit, daß das Schüttgutentsprechend seinem Schüttkegel darauf liegen bleibt und erst durch Einwirkung des radial nach innen transportierenden Doppelschneckenförderers in den Entleerungsschacht fällt. Der Querförderer ist bei dieser Ausführung mit Hubseilen an die Kranbrücke angehängt, welche einerseits am Kopfende der Stützsäule drehbar gelagert ist und anderseits sich mit ihrem äußeren Ende auf einer ringförmigen Kranbahn abstützt. Die Anordnung eines Portalkrans mit einer an der Silowandung angebrachten Kranbahn erfordert eine entsprechend belastbare kostspielige Silowandung und ist daher für mittelgroße Silos mit einem Durchmesser bis etwa 15 m ungeeignet. Bei einer ähnlichen Ausführung nach der DE-OS 1 933 337 ist ein um die lotrechte Mittelachse kreisendes, heb- und senkbares Räumgerät vorgesehen, bei dem Stützen der zentrischen Säule zur Führung einer Mittelbühne dienen und das Drehmoment des kreisenden Räumers aufnehmen. Die vertikalen Kräfte werden auf eine obere Kranbrücke übertragen. Die zentrische Säule besitzt übereinander angeordnete Öffnungen, die durch Seitenwände und jalousieartige horizontale, schräge oder gewölbte Flächen gebildet werden. Ferner sind im Fallkanal Leitflächen in Form einer spiraligen Rutsche angeordnet. Auch bei dieser Ausführung hängt das Hub- und Drehgestell an einer oberen Kranbrücke. Schließlich ist in der DE-OS 1 914 600 eine Ausführung beschrieben, bei der die Stützsäule aus einem an vertikalen Stangen befestigten wendelförmigen Band besteht, an dessen Rand ein mit einem radialen Kragarm für den Querförderer ausgerüstetes Gestell mittels Rollen schraubenförmig um die Achse der Säule verdrehbar gelagert ist. Beim Entleeren sinkt der als Schneckenförderer ausgebildete Querförderer durch Eigengewicht auf das Schüttgut, und durch die schraubenförmige Bewegung um die Säulenachse soll das Schüttgut schichtförmig abgetragen werden. Hingegen soll beim Füllen ein radiales Einebnen stattfinden, wofür eine motorisch angetriebene Stützwalze vorgesehen ist. Die schraubenförmige Aufwärtsbewegung mittels einer angetriebenen Stützsäule ist jedoch bei fluidisierten Schüttgütern,- viele Schüttgüter befinden sich beim Einschütten in den Silo in einem fließfähigen Zustand,- gar nicht möglich. Aus gleichem Grund stößt auch das Entleeren auf große Schwierigkeiten. Demgegenüber liegt der Erfindung die Aufgabe zugrunde, einen Silo der gattungsgemäßen Art derart auszubilden, daß das die Stützsäule bildende wendelförmige Band eine solche Torsionssteifigkeit und Knickfestigkeit erhält, daß es die Last und die Drehmomente des Hub- und Drehgerüstes aufzunehmen vermag.

Diese Aufgabe wird dadurch gelöst, daß innerhalb des wendelformigen Bandes radial und lotrecht verfaufende Versteifungswände angeordnet und am Außenumfang des Bandes Führungsschienen befestigt sind und daß das Hub- und Drehgestell aus einem an Hubwerken aufgehängten und gegen die Führungsschienen anliegenden ringförmgen Hubteil und einem Drehteil besteht, an dem der den Querförderer tragende Kragarm befestigt ist und das mit einem am Hubteil angebrachten Drehwerk verbunden ist.

Durch den Einbau eines radial und lotrecht verlaufende Versteifungswände aufweisenden wendelförmigen Bandes erhält die Stützsäule eine so große Torsionssteifigkeit und Knickfestigkeit, daß der Querförderer in Verbindung mit einem Kragarm nur an dem der Stützsäule zugeordneten Hub- und Drehgestell gelagert zu werden braucht, während das äußere Ende frei ist. Die Vorfertigung der Stützsäule in Verbindung mit der Füllvorrichtung, dem Hub- und Drehgestell und dem Querförderer als bauliche Einheit und die Montage im Silobehälter ist wesentlich vereinfacht. Auch ist der bauliche Aufwand für den Silobehälter geringer. Die Versteifungswände können an einem zentrischen Rohr befestigt sein, das sich auch als Begehungsschacht einrichten läßt. Die Führungsschienen sind vorzugsweise in einer radialen Flucht zu den Versteifungswänden am Außenumfang des wendelförmigen Bandes befestigt.

Ein geeignetes Hub- und Drehgestell besteht zweckmäßig aus einem an Hubwerken aufgehängten und an den Führungsschienen anliegenden ringförmigen Hubgestell, an dem ein den Kragarm tragendes Drehgestell gelagert ist, das über einen Zahnkranz mit einem am Hubgestell angebrachten Drehwerk verbunden ist. Weiterhin kann das teleskopartig verlängerbare Füllrohr am Kragarm des Hub- und Drehgestells und an einer Förderschnecke gelagert sein, die radial auskragend an der Füllvorrichtung befestigt ist. Der Querförderer wird durch die starre Befestigung am Hub- und Drehgestell exakt geführt, so daß eine bessere Verteilung und Räumung des Schüttgutes erzielt wird. Die Steifigkeit der Stützsäule läßt sich auch dadurch erhöhen, daß das wendelförmige Band an seinem nach außen weisenden Rand winklig spitz zuläuft. Diese Maßnahme hat weiterhin den Vorteil, daß das Schüttgut beim Entleeren in die zwischen den Scheibenelementen vorhandenen Zwischenräume gelenkt und ein zu Verstopfungen führender Stau vor den spitzenförmigen Rändern vermieden wird. Eine günstige Ablenkung in den oberen und unteren Zwischenraum wird dadurch erzielt, daß die Winkelspitze etwa in halber Höhe des Randes verläuft.

In der Zeichnung ist ein Ausführungsbeispiel der Erfindung dargestellt ; es zeigt :.

Fig. 1 einen Silo in einem vertikalen Schnitt,

Fig. 2 den Gegenstand der Fig. 1 in einem Querschnitt nach Linie I-I,

Fig. 3 die zentrische Stützsäule des Gegenstandes der Fig. 1 in einer größeren Darstellung,

Fig. 4 den Gegenstand der Fig. 3 in einem Schnitt nach Linie II-II,

Fig. 5 einen Abschnitt der zentrischen Stützsäule in einer schematisierten Darstellung,

Fig. 6 den oberen Teil der Fig. 1 in einer größeren Darstellung,

Fig. 7 den Gegenstand der Fig. 6 in einem Schnitt nach Linie III-III.

Fig. 8 den mittleren Teil der Fig. 1 in einer größeren Darstellung und

Fig. 9 den Gegenstand der Fig. 8 in einem Schnitt nach Linie IV-IV.

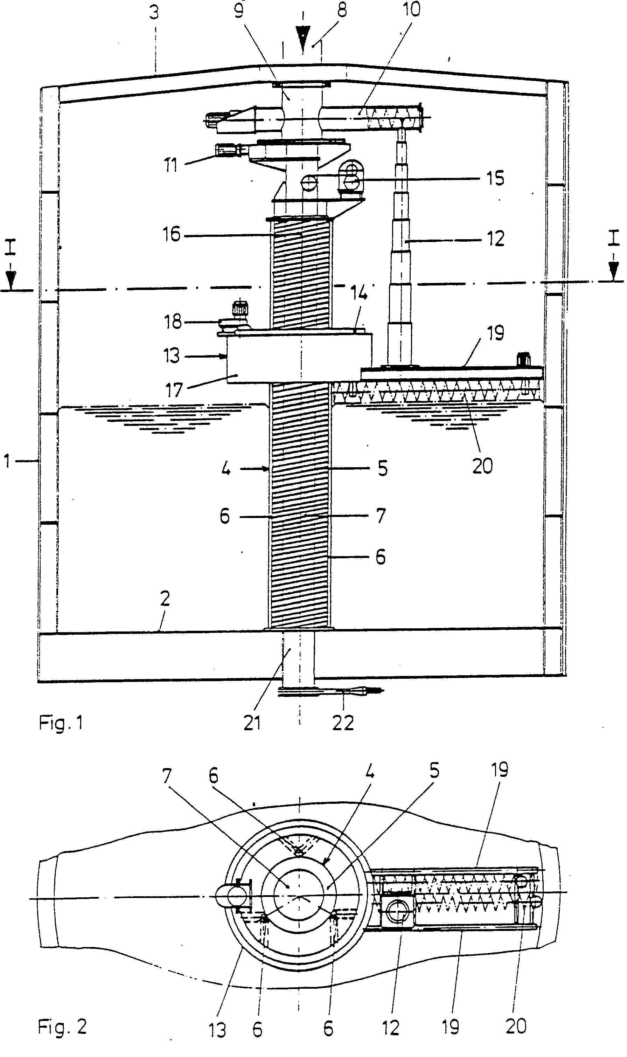

Das in den Fig. 1 und 2 dargestellte Ausführungsbeispiel zeigt einen mittelgroßen Silo, dessen Durchmesser in der Regel bis zu 15 m betragen kann. Der Silo 1 hat einen kreisförmigen Grundriß durch eine zylinderförmige Wandung. Zugeordnet ist ein Boden 2 und ein Dach 3.Silos dieser Art werden in zunehmendem Maße dort verwendet, wo einerseits zum Zwecke des Umweltschutzes ein Versatz durch Windeinwirkung verhindert werden soll und anderseits ein Schutz des Behälterinhaltes gefordert wird.

In der vertikalen Mittelachse ist eine torsionsfeste Stützsäule 4 angeordnet, die aus einem wendelförmigen Band 5 besteht. Am Umfang der Stützsäule 4 sind Führungsschienen 6 für ein Hub- und Drehgestell 13 befestigt, und im Inneren bildet das wendelförmige Band 5 einen Entleerungsschacht 7. Zentrisch über der Stützsäule 4 befindet sich ein Einlaufrohr 8 und eine Füllvorrichtung 9, die mit einer frei auskragenden Förderschnecke 10 ausgerüstet und mittels eines Drehwerks 11 um die Mittelachse verdrehbar ist. Am äußeren Ende der Förderschnecke 10 ist ein lotrecht nach unten teleskopartig verlängerbares Füllrohr 12 angebracht.

An den Führungsschienen 6 der Stützsäule 4 wird ein Hub- und Drehgestell 13 geführt, das aus einem Hubteil 14 und einem Drehteil 17 besteht.

Das Hubteil 14 ist an zwei Hubseilen 16 aufgehängt, die von zwei Hubwerken 15 angetrieben werden. Das Drehteil 17 ist mittels eines Drehwerkes 18 um das heb- und senkbare Hubteil 14 herum verdrehbar. Am Drehteil 18 ist ein aus zwei parallelen Teilen bestehender Kragarm 19 starr befestigt, an dem der Querförderer 20 angebracht ist. Unter der Stützsäule 4 befindet sich im Boden 2 eine Entleerungsöffnung 21 und eine Entleerungsvorrichtung 22.

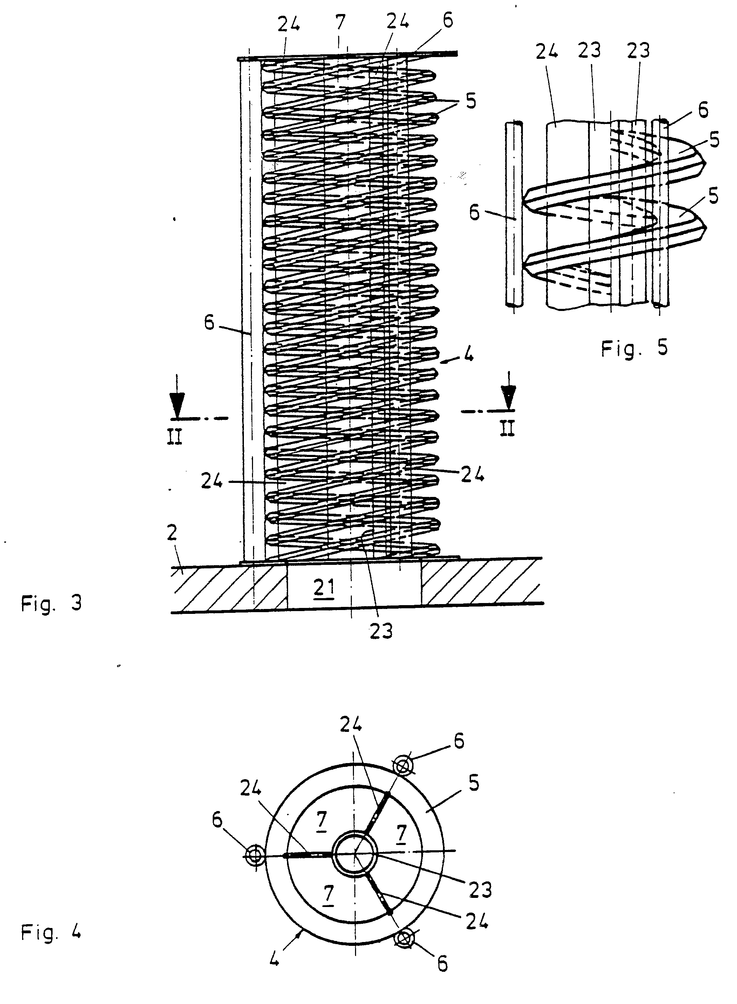

Wie die Fig. 3 bis 5 zeigen, sind innerhalb des wendelförmigen Bandes 5 drei radial liegende und lotrecht verlaufende Versteifungswände 24 angeordnet, die wiederum an einem zentrischen Rohr 23 befestigt sind, welches bedarfsweise als Begehungsschacht eingerichtet sein kann. Die Führungsschienen 6 sind in einer radialen Flucht zu den Versteifungswänden 24 am Außenumfang des wendelförmigen Bandes 5 befestigt. Dieser Aufbau schafft eine torsionssteife und knickfeste Stützsäule 4.

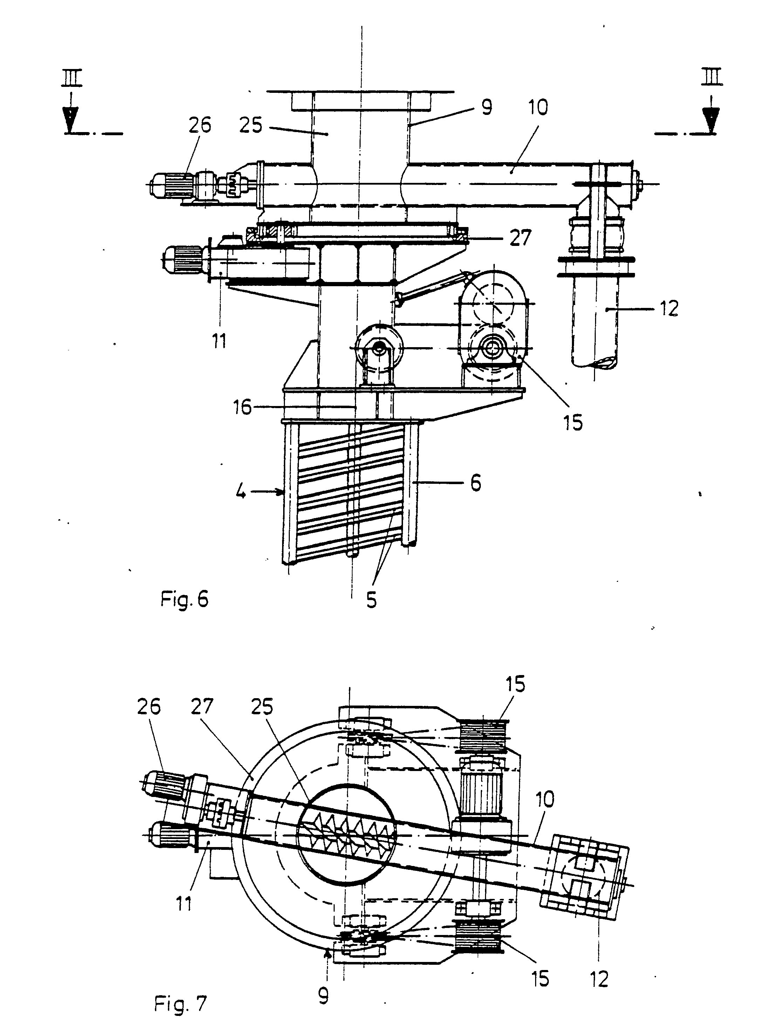

Die in den Fig. 6 und 7 gezeigte Füllvorrichtung 9 besteht aus einem lotrecht auf einem Drehlager 27 angeordneten Rohr 25, durch welches horizontal verlaufend die Förderschnecke 10 ragt. Mit Hilfe des Drehwerkes 11 läßt sich die Füllvorrichtung 9 mit der Förderschnecke 10 und dem daran angeordneten, lotrecht teleskopartig verlängerbaren Füllrohr 12 um die Mittelachse des Silos 1 herum verdrehen. Die Förderschnecke 10 ist mit einem Antriebsmotor 26 ausgerüstet.

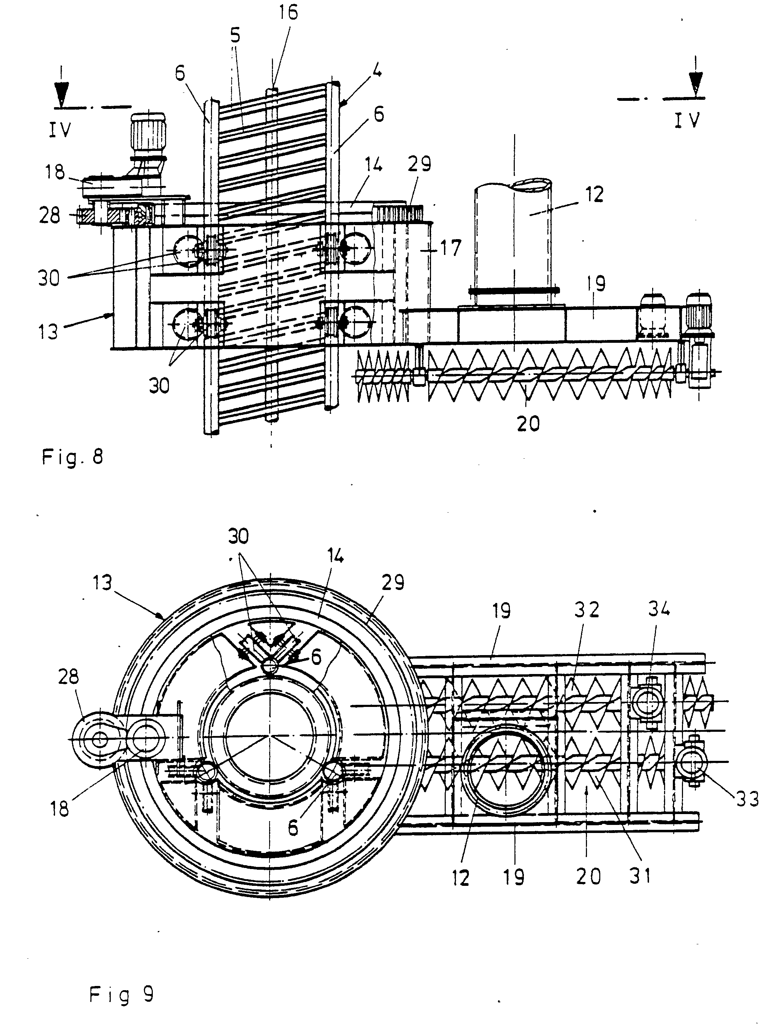

Die Fig. 8 und 9 zeigen das Hub- und Drehgestell 13 mit dem daran angebauten Querförderer 20. Das ringförmige Hubteil 14 liegt mit Laufrollen 30 an den drei rohrförmigen Führungsschienen 6 der Stützsäule 4 an, so daß es bei Betätigung der Hubseile 16 lotrecht geführt wird. Das am Hubteil 14 verdrehbar gelagerte Drehteil 17 ist mit einem Zahnkranz 29 versehen, der mit dem Ritzel 28 des Drehwerks 18 in Eingriff steht. Am Drehteil 17 ist der zweiteilige Kragarm 19 starr befestigt, und zwischen dessen beiden Teilen ist der aus zwei Schnecken 31, 32 bestehende Querförderer 20 angeordnet. Den Schnecken 31, 32 ist je ein Antriebsmotor 33 bzw. 34 zugeordnet. Am Kragarm 19 ist auch das untere Ende des lotrecht teleskopartig verlängerbaren Füllrohres 12 befestigt.

Zum Füllen des Silos 1 wird das Schüttgut von oben durch das Einlaufrohr 8 der Füllvorrichtung 9 aufgegeben, deren Förderschnecke 19 das Schüttgut in das lotrechte Füllrohr 12 transportiert, in dem es nach unten in den Querförderer 20 fällt. Der Querförderer 20 schiebt das Schüttgut radial nach außen und verteilt es somit bei Verdrehung um die Mittelachse des Silos 1 auf dem Siloquerschnitt. Die Füllvorrichtung 9 und das Drehteil 17 des Hub- und Drehgestells 13 werden synchron in gleicher Richtung gedreht, so daß sich der Querförderer 20 immer lotrecht unter der Förderschnecke 10 befindet.

Nach jeder Umdrehung wird das Hub- und Drehgestell 13 um eine Füllschicht angehoben. Das im Bereich der Stützsäule 4 anstehende Schüttgut rutscht entsprechend seinem Schüttkegel auf das wendelförmige Band 5, jedoch nicht in den Entleerungsschacht 7.

Zum Entleeren werden die Schnecken 31,32 des Schneckenförderers 20 in umgekehrter Richtung angetrieben, so daß das Material radial nach innen transportiert, zwischen den Gängen des wendelförmigen Bandes 5 hindurchgedrückt wird und in den Entleerungsschacht 7 fällt. Auch beim Entleerungsvorgang laufen die Füllvorrichtung 9 und das Drehteil 17 des Hub- und Drehgestells 13 synchron. Das Hubteil 14 wird entsprechend dem Schüttaustrag Schicht um Schicht abgesenkt.

**Patentansprüche**

1. Silo mit kreisrundem Grundriß für Schüttgüter, welcher eine zentrische Stützsäule (4), eine an der Stützsäule (4) heb- und senkbar sowie um die Stützsäule (4) verdrehbar angeordnetes Hub- und Drehgestell (13) mit einem mittels eines Kragarmes (19) radial angeordneten Querförderer (20) und Mittel zum Füllen des Silos enthält, wobei die Stützsäule (4) aus einem einen zentrischen Entleerungsschacht (7) bildenden, wendelförmigen Band (5) besteht, dadurch gekennzeichnet, daß innerhalb des wendelförmigen Bandes (5) radial und lotrecht verlaufende Versteifungswände (24) angeordnet und am Außenumfang des Bandes (5) Führungsschienen (6) befestigt sind und daß das Hub- und Drehgestell (13) aus einem an Hubwerken (15) aufgehängten und gegen die Führungsschienen (6) anliegenden ringförmigen Hubteil (14) und einem Drehteil (17) besteht, an dem der den Querförderer (20) tragende Kragarm (19) befestigt ist und das mit einem am Hubteil (14) angebrachten Drehwerk (18) verbunden ist.

2. Silo für Schüttgüter nach Anspruch 1, dadurch gekennzeichnet, daß die Versteifungswände (24) an einem zentrischen Rohr (23) befestigt sind.

3. Silo für Schüttgüter nach Anspruch 1 oder 2, dadurch gekennzeichnet, daß die Führungsschienen (6) in einer radialen Flucht zu den Versteifungswänden (24) am Außenumfang des wendelförmigen Bandes (5) befestigt sind.

4. Silo für Schüttgüter nach einem der Ansprüche 1 bis 3, dadurch gekennzeichnet, daß das Drehteil (17) über einen Zahnkranz (29) mit dem am Hubteil (14) angebrachten Drehwerk (18) verbunden ist.

5. Silo für Schüttgüter nach einem der Ansprüche 1 bis 4, dadurch gekennzeichnet, daß das wendelförmige Band (5) an seinem nach außen weisenden Rand winklig spitz zuläuft.

6. Silo für Schüttgüter nach Anspruch 5, dadurch gekennzeichnet, daß die Winkelspitze etwa in halber Höhe des Randes verläuft.

**Claims**

1. A circular-plan silo for bulk goods, the silo having a central support column (4), a vertically reciprocable frame (13) which is rotatable around the column (4), and comprises a cross-conveyor (20) disposed radially by means of a cantilever arm (19) and means for filling the silo, the column (4) being in the form of a helical strip (5) bounding a central emptying shaft (7), characterised in that radial and vertical stiffening walls (24) are disposed inside the helical strip (5) and guide bars (6) are secured to the outside periphery of the strip (5) and the frame (13) is in the form of an annular lifting part (14), which is suspended on lifting mechanisms (15) and engages the guide bars (6), and a rotating part (17) to which the cantilever arm (19) is secured and which is connected to a rotating mechanism (16) disposed on the lifting part (14).

2. A silo according to claim 1, characterised in that the stiffening walls (24) are secured to a central tube (23).

3. A silo according to claim 1 or 2, characterised in that the guide bars (6) are secured in radial alignment relatively to the walls (24) to the outside periphery of the helical strip (5).

4. A silo according to any of claims 1-3, characterised in that the rotating part (17) is connected by way of a toothed ring (29) to the rotating mechanism (18) on the lifting part (14).

5. A silo according to any of claims 1-4, characterised in that the helical strip (5) converges at an acute angle on its outwardly directed edge.

6. A silo according to claim 5, characterised in that the apex of the acute angle is about half-away up the height of the edge.

**Revendications**

1. Silo pour matières en vrac, possédant un contour circulaire en projection horizontale et comportant une colonne centrale de support (4), un châssis rotatif de levage (13) pouvant être soulevé et abaissé le long de la colonne de support (4) et être entraîné en rotation autour de cette dernière et comportant un convoyeur transversal (20) installé radialement au moyen d'un bras en console (19), et des moyens pour remplir le silo, la colonne de support (4) étant formée par une bande hélicoïdale (5) constituant un puits central de vidage (7), caractérisé en ce que des parois radiales et verticales de renforcement (24) sont disposées à l'intérieur de la bande hélicoïdale (5), que des rails de guidage (6) sont fixés sur le pourtour extérieur de la bande (5), et que le châssis rotatif de levage (13) est constitué par une partie annulaire de levage (14), accrochée à un mécanisme de levage (15) et appliquée contre les rails de guidage (6), et par une partie rotative (17), à laquelle est fixé le bras en console (19) portant le convoyeur transversal (20) et qui est relié à un mécanisme d'entraînement en rotation (18) monté sur la partie de levage (14).

2. Silo pour matières en vrac suivant la revendication 1, caractérisé en ce que les parois de renforcement (24) sont fixées sur un tube central (23).

3. Silo pour matières en vrac suivant la revendication 1 ou 2, caractérisé par le fait que les rails de guidage (6) sont fixés sur le pourtour extérieur de la bande hélicoïdale (5), en étant alignés radialement avec les parois de renforcement (24).

4. Silo pour matières en vrac suivant l'une des revendications 1 à 3, caractérisé par le fait que la partie rotative (17) est reliée par l'intermédiaire d'une couronne dentée (29) à un mécanisme d'entraînement en rotation (18) monté sur la partie de levage (14).

5. Silo pour matières en vrac selon l'une des revendications 1 à 4, caractérisé par le fait que le bord extérieur de la bande hélicoïdale (5) possède une forme anguleuse pointue.

6. Silo pour matières en vrac suivant la revendication 5, caractérisé par le fait que la pointe de la forme anguleuse est située approximativement à mi-hauteur du bord.

Fig. 1

Fig. 2

Fig. 3

Fig. 5

Fig. 4

2

Fig. 6

Fig. 7

Fig. 8

Fig 9